# EUROPÄISCHE PATENTANMELDUNG

(11) **EP 2 574 142 A1**
(43) Veröffentlichungstag der Anmeldung: **27.03.2013**
(21) Anmeldenummer: 11182474.4
(22) Anmeldetag: 23.09.2011
(51) Int. Cl.: H05B 3/84

(54) **Fehlerstrom-Sicherheitsabschaltung für Elektrofahrzeuge**

(71) Anmelder: Saint-Gobain Glass France, 92400 Courbevoie (FR)
(72) Erfinder: Lisinski, Susanne, 50739 Köln (DE); Dr. Schlarb, Andreas, 52134 Herzogenrath (DE); Melcher, Martin, 52134 Herzogenrath (DE)
(74) Vertreter: Lendvai, Tomas

(57) **Zusammenfassung**

Die vorliegende Erfindung betrifft eine Scheibenanordnung (10), umfassend:
- mindestens erste Scheibe (1.1), Zwischenschicht (3) und zweite Scheibe (1.2) und
- mindestens ein elektrisch beheizbares Element (2), das zwischen der Zwischenschicht (3) und der ersten Scheibe (1.1) und/oder zwischen der Zwischenschicht (3) und der zweiten Scheibe (1.2) angeordnet ist,
- eine Gleichspannung von 75 V bis 450 V oder eine Wechselspannung von 25 V bis 450 V erzeugt,
wobei die Spannungsquelle (6) über einen Fehlerstrom-Schutzschalter (7) mit dem elektrisch beheizbaren Element (2) verbunden ist.

## Beschreibung

Die Erfindung betrifft eine Scheibenanordnung mit einem elektrisch beheizbaren Element, insbesondere eine elektrisch beheizbare Fahrzeugscheibe, mit Fehlerstrom-Sicherheitsabschaltung. Die Erfindung betrifft außerdem ein Verfahren zur Herstellung der erfindungsgemäßen Scheibenanordnung und die Verwendung der erfindungsgemäßen Scheibenanordnung in einem Fahrzeug, insbesondere in einem Elektrofahrzeug.

Als Elektrofahrzeuge bezeichnet man Kraftfahrzeuge, die durch elektrische Energie angetrieben werden. Die Antriebsenergie wird meist in Form von aufladbaren Akkumulatoren und wiederaufladbaren Batterien im Fahrzeug mitgeführt oder durch Brennstoffzellen im Fahrzeug selbst erzeugt. Ein Elektromotor wandelt die elektrische Energie in mechanische Energie zur Fortbewegung um. Die Bordspannung von Elektrofahrzeugen beträgt üblicherweise von 100 V bis 400 V.

Aufgrund der begrenzten Energiespeicherdichte von Akkumulatoren oder wiederaufladbaren Batterien ist die Reichweite von Elektrofahrzeugen stark begrenzt. Der effiziente Einsatz von elektrischer Energie ist deshalb bei Elektrofahrzeugen von besonderer Bedeutung.

An die Verglasung von Elektrofahrzeugen werden die gleichen Anforderungen gestellt wie an die Verglasung von Kraftfahrzeugen mit Verbrennungsmotor. Hinsichtlich der Größe des Sichtbereichs und der strukturellen Stabilität der Scheiben gelten folgende gesetzlichen Vorschriften:
- ECE R 43: "Einheitliche Vorschriften für die Genehmigung des Sicherheitsglases und der Verbundglaswerkstoffe" sowie
- Technische Anforderungen an Fahrzeugteile bei der Bauartprüfung § 22 a StVZO, Nr. 29 "Sicherheitsglas".

Diese Vorschriften werden in der Regel durch Verbundglasscheiben erfüllt. Verbundglasscheiben bestehen aus zwei oder mehreren Einzelscheiben, insbesondere aus Floatglas und werden mit einer oder mehreren Zwischenschichten bei Hitze und Druck fest miteinander verbunden. Die Zwischenschichten bestehen meist aus thermoplastischen Kunststoffen wie Polyvinylbutyral (PVB) oder Ethylenvinylacetat (EVA).

Das Sichtfeld einer Fahrzeugscheibe muss frei von Eis und Beschlag gehalten werden. Bei Kraftfahrzeugen mit Verbrennungsmotor wird in der Regel Motorwärme verwendet, um einen Luftstrom zu erwärmen. Der warme Luftstrom wird dann auf die Scheiben gelenkt. Bei Elektrofahrzeugen ist diese Methode ungeeignet, da Elektrofahrzeuge nicht über Motorwärme verfügen. Die Erzeugung von warmer Luft aus elektrischer Energie ist wenig effizient.

Alternativ kann die Scheibe eine elektrische Heizfunktion aufweisen. DE 103 52 464 A1 offenbart eine Verbundglasscheibe mit zwei Glasscheiben. Zwischen den Glasscheiben sind parallel zueinander verlaufende Drähte eingelegt. Wird eine Spannung an die Drähte angelegt, fließt ein elektrischer Strom. Die Glasscheibe wird durch die Joulsche Wärmeentwicklung des stromdurchflossenen Widerstands beheizt. Aufgrund von Design- und Sicherheitsaspekten muss die Anzahl der Drähte in dem Glas sowie der Durchmesser der Drähte so klein wie möglich gehalten werden. Die Drähte dürfen bei Tageslicht und nachts bei Scheinwerferlicht visuell nicht oder kaum wahrnehmbar sein.

Besser geeignet sind transparente, elektrisch leitfähige Beschichtungen, wie sie aus DE 103 33 618 B3 bekannt sind. Dort weist eine Glasscheibe eine elektrisch beheizbare Silberschicht auf. Beschichtungen auf der Basis von dünnen Silberschichten sind kostengünstig herstellbar und alterungsstabil.

Gängige Heizungen mit elektrisch leitfähigen Beschichtungen werden mit der üblichen Bordnetzspannung mit einer Gleichspannung von 12 V bis 14 V oder bei höherer geforderter Heizleistung mit Gleichspannungen bis 42 V betrieben. Der Schichtwiderstand beträgt je nach zur Verfügung stehender Spannung und benötigter Heizleistung zwischen 0,5 Ohm und 5 Ohm. Unter diesen Voraussetzungen lässt sich eine vereiste Windschutzscheibe im Winter in 5 bis 10 Minuten enteisen.

Bei Elektroautos ist es wünschenswert, die Schichtheizung mit der typischen Bordspannung für Elektroautos von 100 V bis 400 V zu betreiben. Das Herabsetzen von Betriebsspannungen von mehr als 100 V auf 42 V oder 14 V, beispielsweise durch ein Netzteil, ist wenig energieeffizient. Des Weiteren ermöglichen hohe Spannungen von 100 V bis 400 V eine kurze Enteisungszeit von beispielsweise 1 Minute bei 3 kW Heizleistung. Derart kurze Enteisungszeiten sind nach derzeitigem Stand der Technik bei Betriebspannungen von 12 V bis 42 V nicht möglich.

Je nach verwendeter Betriebsspannung sind besondere Sicherheitsvorkehrungen notwendig. Gemäß der europäischen Niederspannungsrichtlinie 2006/95/EG gelten Gleichspannungen bis 75V als ungefährlich, so dass auf einen Schutz gegen direktes Berühren verzichtet werden kann. Scheiben mit elektrisch beheizbaren Beschichtungen nach dem Stand der Technik werden mit Spannungen von 12 V bis 42 V betrieben und benötigen deshalb keine gesonderten Sicherheitsvorkehrungen.

Bereits ab einer Gleichspannung von 75 V ist bei Berührung von einer Verletzungsgefahr durch Verkrampfungen und unkontrollierbare Muskelkontraktionen auszugehen. Bei Spannungen über 120 V gilt eine direkte Berührung auch für Erwachsene als lebensgefährlich und muss unter allen Umständen vermieden werden. Bei Verwendung in einem Fahrzeug ist eine Berührung möglich, wenn im Fall eines Unfalls die Isolation der spannungsführenden Beschichtung entfernt wird und eine im Fahrzeug integrierte Unfallabschaltautomatik nicht funktioniert. Gleiches gilt für Zerstörung und Beschädigung der Scheibe durch Außeneinwirkung wie Steinschlag, Vandalismus oder bei Rettungs- und Bergungsversuchen.

Prinzipiell gelten die gleichen Überlegungen auch für Schichtheizungen, die mit Wechselspannung betrieben werden, wobei die sicherheitsrelevanten Grenzwerte hier niedriger liegen. So besteht ab einer Wechselspannung von 25 V ein akutes Verletzungsrisiko und ab einer Wechselspannung von 50 V eine akute Lebensgefahr.

Die Aufgabe der vorliegenden Erfindung besteht darin, eine Verbundscheibe mit einer transparenten, elektrisch leitfähigen Beschichtung bereitzustellen, die bei einer Gleichspannung von 75 V bis 450 V oder einer Wechselspannung von 25 V bis 450 V eine ausreichende Heizleistung aufweist und geeignete Sicherheitsvorkehrungen enthält.

Die Aufgabe der vorliegenden Erfindung wird erfindungsgemäß durch eine Scheibenanordnung gemäß Anspruch 1 gelöst. Bevorzugte Ausführungen gehen aus den Unteransprüchen hervor. Ein Verfahren zur Herstellung einer erfindungsgemäßen Scheibenanordnung und eine Verwendung der Scheibenanordnung gehen aus weiteren Ansprüchen hervor.

Die erfindungsgemäße Scheibenanordnung umfasst:
- mindestens eine erste Scheibe, eine Zwischenschicht und eine zweite Scheibe und
- mindestens ein elektrisch beheizbares Element, das zwischen der Zwischenschicht und der ersten Scheibe und/oder zwischen der Zwischenschicht und der zweiten Scheibe angeordnet ist,
   wobei eine Spannungsquelle über einen Fehlerstrom-Schutzschalter mit dem elektrisch beheizbaren Element verbunden ist. Die Spannungsquelle hat eine Gleichspannung von 75 V bis 450 V.

Die Anordnung aus erster Scheibe, Zwischenschicht und zweiter Scheibe wird im Folgenden auch als Verbundscheibe bezeichnet.

Eine alternative erfindungsgemäße Scheibenanordnung umfasst:
- eine Scheibe und
- mindestens ein elektrisch beheizbares Element, das mindestens teilweise auf der Scheibe angeordnet ist,
   wobei eine Spannungsquelle über einen Fehlerstrom-Schutzschalter mit dem elektrisch beheizbaren Element verbunden ist. Die Spannungsquelle hat eine Gleichspannung von 75 V bis 450 V.

Die Scheibe wird im Folgenden auch als Einzelscheibe bezeichnet.

In einer bevorzugten Ausgestaltung der erfindungsgemäßen Scheibenanordnung hat die Spannungsquelle eine Gleichspannung von 120 V bis 450 V. In diesem Spannungsbereich gilt eine direkte Berührung auch für Erwachsene als lebensgefährlich und muss unter allen Umständen vermieden werden.

In einer alternativen Ausgestaltung der erfindungsgemäßen Scheibenanordnung hat die Spannungsquelle eine Wechselspannung von 25 V bis 450 V. In einer bevorzugten Ausgestaltung der erfindungsgemäßen Scheibenanordnung hat die Spannungsquelle eine Wechselspannung von 50 V bis 450 V. In diesem Spannungsbereich gilt eine direkte Berührung auch für Erwachsene als lebensgefährlich und muss unter allen Umständen vermieden werden. In einer weiteren bevorzugten Ausgestaltung der erfindungsgemäßen Scheibenanordnung hat die Spannungsquelle eine Wechselspannung von 100 V bis 300 V. Dieser Spannungsbereich ist besonders vorteilhaft für den Einsatz der Verbundscheibe in Möbeln, Geräten und Gebäuden, insbesondere für elektrische Heizkörper, da Wechselspannungen von 100V bis 300 V als haushaltsübliche Netzspannungen zur Verfügung stehen.

Die vorliegende Erfindung beruht wesentlich auf dem Gedanken, dass eine hohe Spannung für einen Menschen gefährlich ist, wenn der Strom durch Teile des menschlichen Körpers fließen kann. Eine hohe Spannung bedeutet im Sinne der vorliegenden Erfindung eine Gleichspannung von mehr als 75 V oder eine Wechselspannung von mehr als 25 V. Bei derart hohen Spannungen findet bei Berührung durch einen Menschen in der Regel ein gesundheitsbeeinträchtigender Stromfluss durch den menschlichen Körper statt. Selbst wenn der Stromfluss noch zu keinen organischen Schäden im menschlichen Körper führt, kann ein Verkrampfungen oder Erschrecken zu Unfällen führen.

Es gilt deshalb eine Scheibenanordnung mit elektrisch beheizbarem Element bereitzustellen, die bei Betrieb mit einer hohen Spannung einen Stromfluss durch den menschlichen Körper sofort unterbricht. Dies ist insbesondere bei einer Beschädigung oder Zerstörung der Scheibe möglich, beispielsweise bei einem Unfall oder einem Bergungsversuch durch Rettungskräfte.

Um die erfindungsgemäße Aufgabe zu lösen, weist die Scheibenanordnung ein Fehlerstromüberwachungsmittel und insbesondere einen Fehlerstrom-Schutzschalter oder einen Differenzstrom-Schutzschalter, mit oder ohne Leistungsschutzschalter auf. Fehlerstrom-Schutzschalter messen die Differenzstromstärke zwischen einem abfließenden und einem zurückfließenden elektrischen Strom. Die an den Stromleitungen anliegende Spannung wird unterbrochen, wenn die Differenzstromstärke den für den Fehlerstrom-Schutzschalter charakteristischen Bemessungsfehlerstrom überschreitet.

Für die Erfassung von Fehlerströmen einer durch eine Wechselspannung gespeisten Scheibenanordnung genügen sogenannte Fehlerstrom-Schutzschalter vom Typ AC oder Typ A. Fehlerstrom-Schutzschalter vom Typ AC sind für die Erfassung von rein sinusförmigen Fehlerströmen geeignet. Fehlerstrom-Schutzschalter vom Typ A erfassen rein sinusförmige Wechselströme sowie pulsierende Gleichspannungen.

Zur Erfassung von Fehlerströmen im Gleichstrombereich müssen spezielle Fehlerstrom-Schutzschalter für Gleichfehlerströme eingesetzt werden. Alternativ können handelsübliche, allstromsensitive Fehlerstrom-Schutzschalter vom sogenannten Typ B eingesetzt werden. Allstromsensitive Fehlerstrom-Schutzschalter enthalten einen zusätzlichen Summenstromwandler zum Erfassen glatter Gleichströme. Für die Überwachung von Gleichfehlerströmen muss am Fehlerstrom-Schutzschalter in der Regel eine Versorgungsspannung anliegen, beispielsweise eine zusätzliche Wechselspannung.

In einer vorteilhaften Ausgestaltung der Erfindung weist der Fehlerstrom-Schutzschalter einen Bemessungsfehlerstrom von < 30 mA und bevorzugt von < 10 mA auf. Ströme von weniger oder gleich 30 mA und bevorzugt weniger oder gleich 10 mA gelten im Allgemeinen als für den menschlichen Körper unschädlich. Bei Berührung von hochspannungsführenden Elementen der Scheibe oder der Zuleitungen wird ein für einen Menschen gesundheitsbeeinträchtigender Strom rechtzeitig unterbrochen.

Die Abschaltung über den Fehlerstrom-Schutzschalter ist insbesondere dann wichtig, wenn eine im Elektrofahrzeug befindliche Unfallabschaltautomatik nicht funktioniert, weil sie einen defekt aufweist oder die Sensoren einer Unfallabschaltautomatik keinen Unfall registrieren, da beispielsweise nur die Verglasung betroffen ist. Die kann der Fall sein, wenn beispielsweise ein Personenschaden im Bereich der Verglasung stattfindet. Es besonders vorteilhaft, wenn der Fehlerstrom-Schutzschalter unmittelbar mit den Stromleitungen der Scheibe verbunden ist und insbesondere der zurückfließende Strom direkt an der entsprechenden Stromleitung der Scheibe gemessen wird, anstelle ihn über die Bordmasse zum Bordnetz zurückzuführen..

Als Scheibe der Verbundscheibe oder der Einzelscheibe sind im Grunde alle transparenten, elektrisch isolierenden Substrate geeignet, die unter den Bedingungen der Herstellung und der Verwendung der erfindungsgemäßen Scheibe thermisch und chemisch stabil sowie dimensionsstabil sind.

Die Scheibe enthält bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Beispiele geeigneter Gläser sind aus EP 0 847 965 B1 bekannt.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung.

Die Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt ist die Scheibe planar oder leicht oder stark in einer Richtung oder in mehreren Richtungen des Raumes gebogen. Insbesondere werden planare Substrate verwendet. Die Scheibe kann farblos oder gefärbt sein.

In einer vorteilhaften Ausgestaltung enthält die erfindungsgemäße Verbundscheibe mindestens zwei Scheiben, die mit mindestens einer Zwischenschicht miteinander verbunden sind. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Die erfindungsgemäße Verbundscheibe enthält mindestens ein elektrisch beheizbares Element, das auf einer der Zwischenschicht zugewandten Seite einer der ersten oder zweiten Scheibe der Verbundscheibe angeordnet ist. Das elektrisch beheizbare Element kann direkt auf einer der Scheiben angeordnet sein. Das elektrisch beheizbare Element kann vorteilhafterweise auf der Zwischenschicht selbst angeordnet sein oder in mehrere Zwischenschichten eingebettet sein.

Die erfindungsgemäße Einzelscheibe enthält mindestens ein elektrisch beheizbares Element, das auf bevorzugt auf einer Seite der Einzelscheibe angeordnet ist. Das elektrisch beheizbare Element kann direkt auf die Scheibe aufgebracht sein. Das elektrisch beheizbare Element kann alternativ auf einer Folie angeordnet sein oder in zwischen zwei oder mehreren Folien eingebettet sein. Das elektrisch beheizbare Element kann durch die Folie oder durch einen Lack elektrisch isoliert und vor Korrosion geschützt sein. Bei Verwendung in einem Fahrzeug ist das elektrisch beheizbare Element bevorzugt auf der in Einbaulage dem Fahrzeuginneren zugewandten Seite der Einzelscheibe angeordnet.

Das erfindungsgemäße elektrisch beheizbare Element kann vorteilhafterweise eine transparente und elektrisch leitfähige Beschichtung sein. Die erfindungsgemäße transparente, elektrisch leitfähige Beschichtung ist für elektromagnetische Strahlung, vorzugsweise elektromagnetische Strahlung einer Wellenlänge von 300 bis 1.300 nm, insbesondere für sichtbares Licht, durchlässig. "Durchlässig" bedeutet, dass die Gesamttransmission der Scheibe den gesetzlichen Bestimmungen entspricht und insbesondere für sichtbares Licht bevorzugt >70% und insbesondere >80% ist.

Solche Beschichtungen sind beispielsweise aus DE 20 2008 017 611 U1 und EP 0 847 965 B1 bekannt. Sie bestehen in der Regel aus einer Metallschicht wie einer Silberschicht oder silberhaltigen Metalllegierung, die zwischen mindestens zwei Beschichtungen aus dielektrischem Material vom Typ Metalloxid eingebettet ist. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid oder Aluminiumnitrid enthalten. Bevorzugt werden Metallschichtsysteme mit mehreren Metallschichten verwendet, wobei die einzelnen Metallschichten durch mindestens eine Schicht aus dielektrischem Material getrennt sind.

Der Schichtaufbau wird im Allgemeinen durch eine Folge von Abscheidevorgängen erhalten, die durch ein Vakuumverfahren wie die magnetfeldgestützte Kathodenzerstäubung durchgeführt werden. Auf beiden Seiten der Silberschicht können auch sehr feine Metallschichten angeordnet werden, die insbesondere Titan, Nickel, Chrom, Nickel-Chrom oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Die Dicke der transparenten, elektrisch leitfähigen Beschichtung kann breit variieren und den Erfordernissen des Einzelfalls angepasst werden. Wesentlich ist dabei, dass die Dicke der elektrisch leitfähigen, transparenten Beschichtung nicht so hoch werden darf, dass sie elektromagnetische Strahlung, vorzugsweise elektromagnetische Strahlung einer Wellenlänge von 300 bis 1.300 nm in hohem Maße absorbiert oder reflektiert.

In einer weiteren vorteilhaften Ausgestaltung der erfindungsgemäßen Scheibe ist die transparente, elektrisch leitfähige Beschichtung auf einer Folie, beispielsweise einer Polymerfolie angeordnet. Die Polymerfolie kann auf ihrer Vorderseite und auf ihrer Rückseite mit jeweils einer weiteren Polymerfolie flächig verbunden sein. Ein solcher Verbund kann beispielsweise eine Verbindungsfolie aus Polyvinylbutyral (PVB), eine mit der Beschichtung beschichteten Polyethylenterephthalat (PET)-Folie und eine Isolationsschicht aus Polyvinylbutyral (PVB) umfassen. Die Dicke der Polyvinylbutyral (PVB)-Folie beträgt beispielsweise 0,3 mm bis 0,5 mm. Die Dicke der Polyethylenterephthalat (PET)-Folie beträgt beispielsweise von 40 µm bis 80 µm und insbesondere 50 µm.

In einer vorteilhaften Ausgestaltung weist die erfindungsgemäße transparente, elektrisch leitfähige Beschichtung einen Flächenwiderstand von 1 Ohm/Quadrat bis 100 Ohm/Quadrat, bevorzugt von 1 Ohm/Quadrat bis 10 Ohm/Quadrat und besonders bevorzugt von 3 Ohm/Quadrat bis 5 Ohm/Quadrat, auf. In einer weiteren vorteilhaften Ausgestaltung enthält die erfindungsgemäßen transparente, elektrisch leitfähige Beschichtung Silber (Ag), Indium-Zinnoxid (ITO), fluordotiertes Zinnoxid (SnO₂:F) oder aluminiumdotiertes Zinkoxid (ZnO:Al). Besonders vorteilhaft können auch hohe Flächenwiderstände im Bereich 10 Ohm/Quadrat bis 100 Ohm/Quadrat sein, die beispielsweise durch metallisierte Polymerfolien oder durch künstliche Erhöhung des Flächenwiderstand durch Strukturierung, beispielsweise mittels eines Lasers, erzielt werden werden.

In einer vorteilhaften Ausgestaltung weist die erfindungsgemäße transparente, elektrisch leitfähige erste Beschichtung n Einschnitte, wobei n eine ganze Zahl ≥ 1 ist, auf, so dass der Widerstand der ersten transparenten, elektrisch leitfähigen Beschichtung bei einer Gleichspannung von 75 V bis 450 V oder einer Wechselspannung von 25 V bis 450 V eine Heizleistung von 300 W/m² bis 4000 W/m² aufweist.

Die Einschnitte trennen die Beschichtung in voneinander elektrisch isolierte Bereiche. Die Einschnitte können die Beschichtung in voneinander vollständig elektrisch isolierte Bereiche trennen. Diese Bereiche können durch Sammelleiter in Reihe oder parallel verbunden werden. Alternativ oder in Kombination dazu können die Einschnitte die Beschichtung nur Abschnittsweise unterteilen. Dies hat zur Folge, dass der Strom mäanderförmig durch die Beschichtung fließt. Dadurch wird der Strompfad durch die Beschichtung verlängert und der Gesamtwiderstand der Beschichtung erhöht. Die genaue Anzahl, die genaue Lage und die Länge der Einschnitte zur Erzielung eines gewünschten Gesamtwiderstandes kann durch einfache Versuche oder Simulationen ermittelt werden. Die Einschnitte werden bevorzugt so gestaltet, dass die Durchsicht durch die Verbundscheibe möglichst wenig beeinträchtigt wird und sich eine möglichst homogene Verteilung der Heizleistung ergibt.

Die Einschnitte in die transparente, elektrisch leitfähige Beschichtung erfolgen bevorzugt mittels eines Lasers. Verfahren zum Strukturieren dünner Metallfilme sind beispielsweise aus EP 2 200 097 A1 oder EP 2 139 049 A1 bekannt. Alternativ können die Einschnitte durch mechanisches Abtragen sowie durch chemisches oder physikalisches Ätzen erfolgen. Die minimale Breite der Einschnitte ist an die zu isolierende Spannung anzupassen und liegt bevorzugt bei 10 µm bis 500 µm, besonders bevorzugt bei 50 µm bis 100 µm.

Die transparenten, elektrisch leitfähigen Beschichtungen sind mit Sammelleitern, sogenannten bus bars, zur Übertragung elektrischer Leistung verbunden. Beispiele geeigneter Sammelleiter sind aus DE 103 33 618 B3 und EP 0 025 755 B1 bekannt. Die Sammelleiter werden beispielsweise durch Aufdrucken einer leitfähigen Paste hergestellt, die vor dem Biegen und/oder beim Biegen der Glasscheiben eingebrannt wird. Die leitfähige Paste enthält bevorzugt Silber-Partikel und Glasfritten. Die Schichtdicke der eingebrannten Silber-Paste beträgt insbesondere von 5 µm bis 20 µm.

In einer alternativen Ausgestaltung der erfindungsgemäßen Sammelleiter werden dünne und schmale Metallfolienstreifen oder Metalldrähte verwendet, die bevorzugt Kupfer und/oder Aluminium enthalten. Insbesondere werden Kupferfolienstreifen mit einer Dicke von 50 µm verwendet. Die Breite der Kupferfolienstreifen beträgt bevorzugt von 1 mm bis 10 mm. Die Metallfolienstreifen oder Metalldrähte werden beim Zusammenlegen der Verbundschichten auf die Beschichtung aufgelegt. Beispiele für die Metallfolienstreifen werden in DE 42 35 063 A1, DE 20 2004 019 286 U1 und DE 93 13 394 U1 beschrieben. Im späteren Autoklavprozess wird durch Einwirkung von Wärme und Druck ein sicherer elektrischer Kontakt zwischen den Sammelleitern und der Beschichtung erreicht. Der elektrische Kontakt zwischen Beschichtung und Sammelleiter kann aber auch durch Auflöten oder Kleben mit einem elektrisch leitfähigen Kleber hergestellt werden.

In einer alternativen Ausgestaltung kann das elektrisch beheizbare Element eine elektrisch leitfähige, lineare Struktur enthalten. Die elektrisch leitfähige, lineare Struktur ist bevorzugt eine leitfähige Silberpaste, die auf eine Seite einer Scheibe aufgedruckt und eingebrannt wurde. Alternativ können beispielsweise einzelne, dünne Drähte aus einem Metal auf der Scheibe oder zwischen einer Scheibe und einer Zwischenschicht angeordnet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten. Die elektrisch leitfähige, lineare Struktur ist beispielsweise durch einen isolierenden Lack, beispielsweise einem Acryl- oder Kunstharzlack, oder mit einer Polymerfolie isoliert und vor direkter Berührung geschützt. Die elektrisch leitfähige, lineare Struktur kann ebenfalls mit den oben beschriebenen Sammelleitern kontaktiert werden.

Ein weiterer Aspekt der Erfindung umfasst ein Verfahren zur Herstellung einer erfindungsgemäßen Scheibenanordnung, wobei in einem ersten Schritt mindestens eine erste Scheibe, eine Zwischenschicht und eine zweite Scheibe und mindestens eine transparente, elektrisch leitfähige Beschichtung miteinander laminiert werden. In einem zweiten Schritt wird die transparente, elektrisch leitfähige Beschichtung über einen Fehlerstrom-Schutzschalter mit einer Spannungsquelle verbunden. Die Spannungsquelle liefert eine Gleichspannung von 75 V bis 450 V oder einer Wechselspannung von 25 V bis 450 V.

Die Erfindung umfasst weiter die Verwendung der erfindungsgemäßen Scheibenanordnung in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe.

Die erfindungsgemäße Scheibenanordnung wird bevorzugt in Fortbewegungsmitteln mit einer Betriebsspannung von 120 V bis 450 V Gleichspannung oder von 50 V bis 450 V Wechselspannung verwendet.

Die erfindungsgemäße Scheibenanordnung wird weiter bevorzugt verwendet als Fahrzeugscheibe in Kraftfahrzeugen, die durch Umwandlung elektrischer Energie angetrieben werden, insbesondere in Elektrofahrzeugen. Die elektrische Energie wird aus Akkumulatoren, wiederaufladbaren Batterien, Brennstoffzellen oder verbrennungsmotorgetriebenen Generatoren bezogen.

Die erfindungsgemäße Scheibenanordnung wird bevorzugt verwendet als Fahrzeugscheibe in Hybridelektrofahrzeugen, die neben der Umwandlung elektrischer Energie durch Umwandlung einer weiteren Energieform angetrieben werden. Die weitere Energieform ist bevorzugt ein Verbrennungsmotor, insbesondere ein Dieselmotor.

Die erfindungsgemäße Scheibenanordnung wird weiter bevorzugt verwendet als funktionales Einzelstück und als Einbauteil in Möbeln, Geräten und Gebäuden, insbesondere als elektrischer Heizkörper.

Im Folgenden wird die Erfindung anhand einer Zeichnung näher erläutert. Die Zeichnung ist eine schematische Darstellung und nicht maßstabsgetreu. Die Zeichnung schränkt die Erfindung in keiner Weise ein.

Es zeigen:
Figur 1A eine Draufsicht auf eine erfindungsgemäß ausgebildete Scheibenanordnung mit einer Scheibe,
Figur 1B eine Querschnittsdarstellung entlang der Linie A-A' aus Figur 1A durch eine erfindungsgemäß ausgebildete Scheibe,
Figur 2A eine Draufsicht auf eine alternative erfindungsgemäß ausgebildete Scheibenanordnung mit einer Scheibe,
Figur 2B eine Querschnittsdarstellung entlang der Linie B-B' aus Figur 2A durch eine erfindungsgemäß ausgebildete Scheibe,
Figur 3 ein Flussdiagramm eines Ausführungsbeispiels des erfindungsgemäßen Verfahrens.

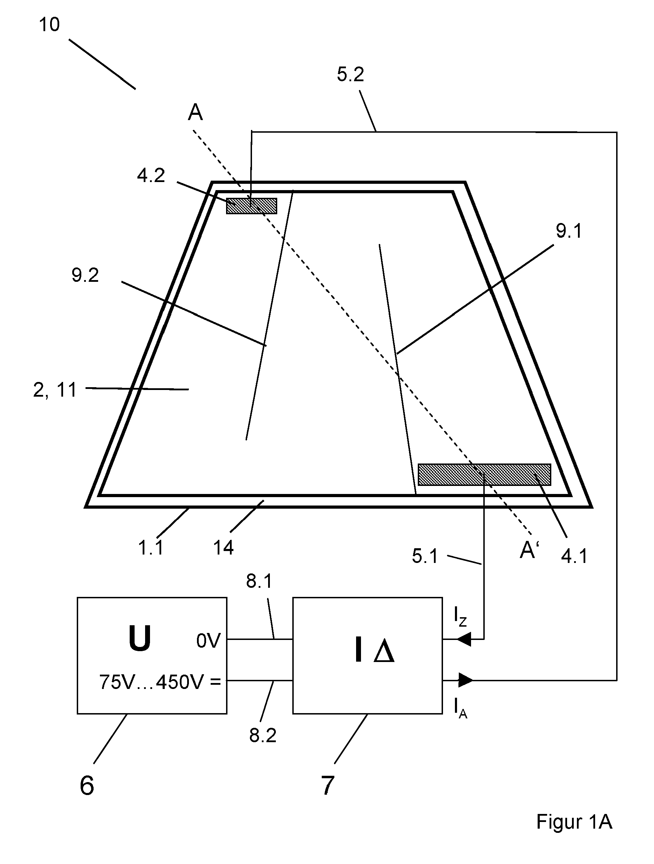

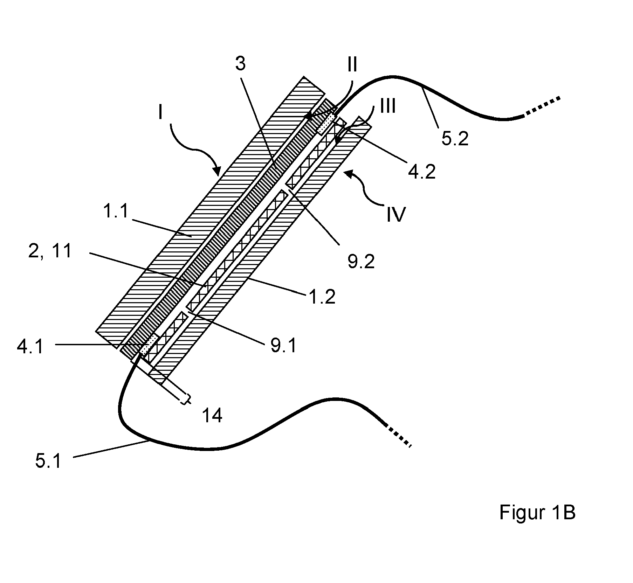

Figur 1A zeigt eine mit dem Bezugszeichen 10 bezeichnete erfindungsgemäß ausgebildete Scheibenanordnung mit einer beheizbaren Verbundscheibe 1 in einer Draufsicht. Figur 1B zeigt eine Querschnittsdarstellung entlang der Linie A-A' aus Figur 1.

Die einzelnen Scheiben 1.1 und 1.2 der Verbundscheibe 1 enthalten Floatglas und weisen Dicken von jeweils 2,1 mm auf. Die einzelnen Scheiben 1.1 und 1.2 sind mit einer thermoplastischen Zwischenschicht 3 miteinander verbunden. Die thermoplastische Zwischenschicht 3 besteht aus einer Polyvinylbutyral (PVB)-Folie 3 mit einer Dicke von 0,76 mm. Im dargestellten Beispiel ist ein elektrisch beheizbares Element 2 in Form einer transparenten, elektrisch leitfähigen Beschichtung 11 auf die der thermoplastischen Zwischenschicht 3 zugewandten Seite III der inneren Scheibe 1.2 aufgebracht. Die Beschichtung 11 dient der Beheizung der Verbundscheibe 1. Die Beschichtung 11 kann gleichwohl auf die der thermoplastischen Zwischenschicht 3 zugewandten Seite II der äußeren Scheibe 1.1, oder auf beiden Scheibeninnenseiten II und III aufgebracht sein. In Einbaulage beispielsweise in einem Fahrzeug ist die Scheibenseite I die Außenseite der äußeren Scheibe 1.1 also die dem Fahrzeuginnenraum abgewandte Seite der Verglasung. Die Beschichtung 11 ist beispielsweise aus EP 0 847 965 B1 bekannt und enthält zwei Silberschichten, die jeweils zwischen mehreren Metall- und Metalloxidschichten eingebettet sind. Eine beispielhafte Schichtfolge ist in Tabelle 1 dargestellt.

Die Schichtfolge hat einen Flächenwiderstand von etwa 3 Ohm/Quadrat bis 5 Ohm/Quadrat.

### Tabelle 1

Die Beschichtung 11 erstreckt sich über die gesamte Fläche der Seite IIIder Scheibe 1.2, abzüglich einer Randentschichtung 14 in Form eines umlaufenden rahmenförmigen entschichteten Bereichs mit einer Breite von 8 mm. Dieser dient der elektrischen Isolierung zwischen der spannungsführenden Beschichtung und der Fahrzeugkarosserie. Der entschichtete Bereich ist durch Verkleben mit der Zwischenschicht 3 hermetisch versiegelt.

| Material | Schichtdicke [nm] |
|---|---|
| Si₃N₄ | 9 |
| ZnO | 21 |
| Ti | 1 |
| Ag | 9 |
| Ti | 1 |
| ZnO | 16 |
| Si₃N₄ | 57 |
| ZnO | 16 |
| Ti | 1 |
| Ag | 10 |
| Ti | 1 |
| ZnO | 20 |
| Si₃N₄ | 18 |

Die Beschichtung 11 weist zwei Einschnitt 9.1 und 9.2 auf. Die Einschnitte 9.1, 9.2 wurden mit einem fokussierten Laserstrahl in die Beschichtung 11 eingebracht. Ein Sammelleiter 4.1 befindet sich am in Einbaulage unteren Rand der Beschichtung 11 in einem Bereich, der teilweise durch den Einschnitt 9.1 abgetrennt ist und der Sammelleiter 4.2 an deren oberen Rand in einem Bereich, der teilweise durch den Einschnitt 9.2 abgetrennt ist.

Wird eine Betriebsspannung über die Zuleitungen 5.1 und 5.2 an die Sammelleiter 4.1 und 4.2 angelegt, so fließt ein Strom durch die transparente, elektrische leitfähige Beschichtung 11. Der Weg des elektrischen Stromes wird durch die Einschnitte 9.1 und 9.2 verlängert und der ohmsche Widerstand der Beschichtung 11 zwischen den Sammelleitern 4.1 und 4.2 erhöht.

Die Sammelleiter 4.1, 4.2 wurden mittels einer leitfähigen Silberpaste auf die Beschichtung 11 aufgedruckt und eingebrannt. Die Sammelleiter 4.1, 4.2 sind elektrisch leitend mit den darunterliegenden Bereichen der Beschichtung 11 verbunden. Die Zuleitungen 5.1 und 5.2 bestehen aus verzinnten Kupferfolien mit einer Breite von 10 mm und einer Dicke von 0,3 mm. Die Zuleitung 5.1 ist mit dem Sammelleiter 4.1 und die Zuleitung 5.2 ist mit dem Sammelleiter 4.2 verlötet.

Die erfindungsgemäße Scheibenanordnung 10 weist eine Spannungsquelle 6 auf, deren Spannungsausgänge über Verbindungsleitungen 8.1, 8.2 mit einem Fehlerstrom-Schutzschalter 7 verbunden sind. Der Fehlerstrom-Schutzschalter 7 ist für glatte Gleichströme geeignet. Bei Verwendung der erfindungsgemäßen Scheibenanordnung 10 in einem Fahrzeug, insbesondere in einem Elektro- oder Hybridfahrzeug, kann die Spannungsquelle 6 die Bordelektrik sein und die anliegende Spannung die Bordspannung. Alternativ kann die Bordspannung in eine höhere Spannung oder eine niedrigere Spannung transformiert werden. Im Falle eines Elektroautos kann die Spannung aus Batterien oder Akkumulatoren entnommen und beträgt etwa von 75 V bis 450 V Gleichspannung und beispielsweise 400 V Gleichspannung.

Der Ausgang des Fehlerstrom-Schutzschalters 7 ist über Zuleitungen 5.1, 5.2 mit den Sammelleitern 4.1, 4.2 der Verbundscheibe 1 verbunden. Die an die Sammelleiter 4.1 und 4.2 angelegte Spannung erzeugt einen Stromfluss durch die transparente, elektrisch leitfähige Beschichtung 11. Die Beschichtung 11 erwärmt sich in Folge des Stromflusses und erwärmt damit die Verbundscheibe 1.

Während des Betriebs vergleicht die Elektrik des Fehlerstrom-Schutzschalters 6 den beispielsweise über die Zuleitung 5.2 abfließenden Strom I_{A} mit dem über die Zuleitung 5.1 zurückfließenden Strom I_{Z}. Bei ordnungsgemäßem Betrieb ist die Summe beider Ströme etwa null und damit kleiner als der Bemessungsfehlerstrom des Fehlerstrom-Schutzschalters 7.

Bei einer Beschädigung der Verbundscheibe 1 oder eines Defekts, beispielsweise eine mangelnde Isolation der Zuleitungen 5.1 oder 5.2, ist ein Kontakt von hochspannungsführenden Teilen durch einen menschlichen Körper möglich. In diesem Falle kann beispielsweise ein Stromfluss durch den menschlichen Körper von den hochspannungsführenden Teilen zur Fahrzeugmasse stattfinden. Dies führt zu einem Differenzstrom zwischen dem abfließenden Storm I_{A} und dem zurückfließenden Strom I_{Z}. Überschreitet der Differenzstrom I_{A}-I_{Z} den Bemessungsfehlerstrom des Fehlerstrom-Schutzschalters 7 so schaltet dieser die Zuleitungen 5.1, 5.2 und damit die gesamte Verbundscheibe 1 mit der transparenten, elektrisch leitfähigen Beschichtung 11 spannungsfrei. Der Bemessungsfehlerstrom des Fehlerstrom-Schutzschalters 7 wird dabei so gewählt, dass die Person, die die hochspannungsführenden Teile berührt, nicht geschädigt wird. Im gegebenen Beispiel beträgt der Bemessungsfehlerstrom des Fehlerstrom-Schutzschalters 7 beispielsweise 10 mA.

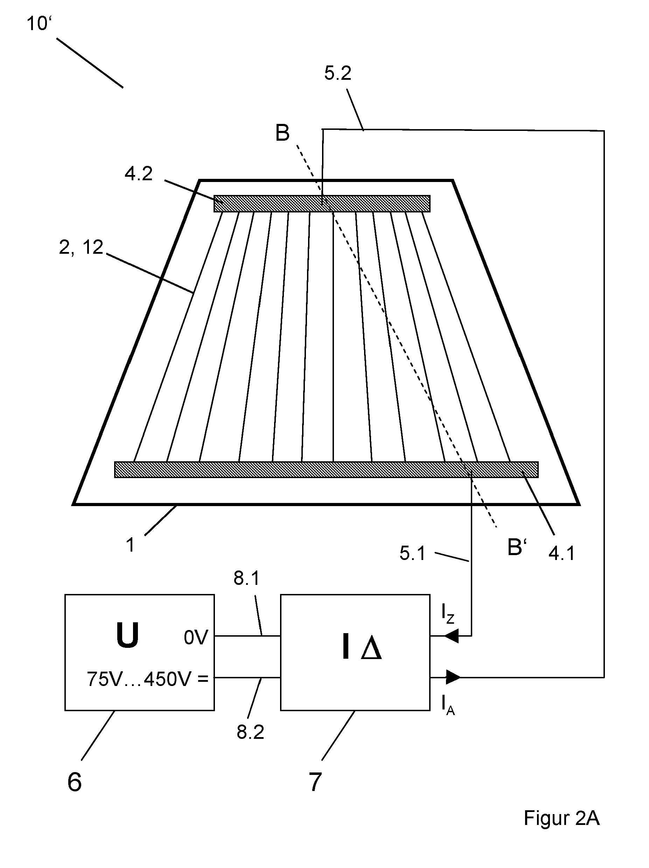

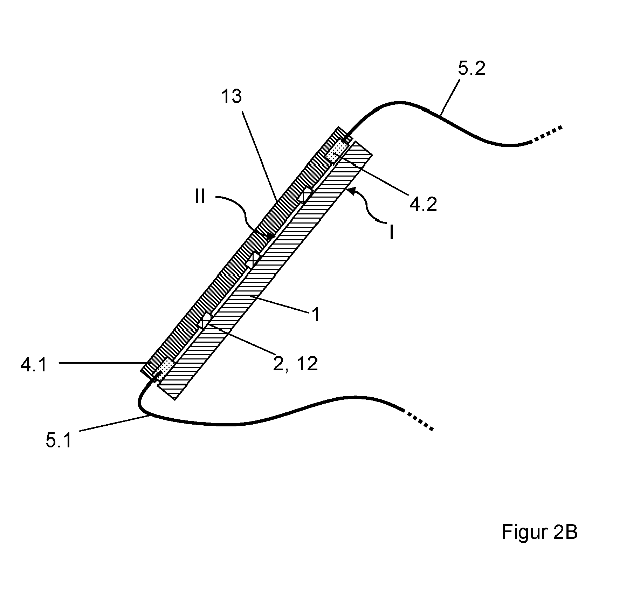

In Figur 2A ist eine alternative Ausgestaltung einer erfindungsgemäßen Scheibenanordnung 10' in einer Draufsicht dargestellt. Figur 2B zeigt eine Querschnittsdarstellung der erfindungsgemäßen Scheibe 1' entlang der Schnittlinie B-B' aus Figur 2A. Die erfindungsgemäße Scheibe 1' der Scheibenanordnung 10' ist beispielsweise als Einzelscheibe in Form eines Einscheibensicherheitsglases ausgestaltet. Die Scheibe 1' enthält beispielsweise vorgespanntes oder teilvorgespanntes Floatglas mit einer Dicke von 2,1 mm. Das elektrisch beheizbare Element 2 ist als elektrisch leitfähige, lineare Struktur 12 ausgestaltet, die die Sammelleiter 4.1 und 4.2 linienförmig miteinander verbindet. In Figur 2A sind zwölf nebeneinander angeordnete elektrisch leitfähige, lineare Strukturen 12 dargestellt. Die elektrisch leitfähige, lineare Struktur 12 ist beispielsweise eine leitfähige Silberpaste, die auf die Seite II der Scheibe 1' aufgedruckt und eingebrannt wurde. Bei Verwendung der Scheibe 1' beispielsweise als Heckscheibe eines Elektrofahrzeugs ist die Seite II der Scheibe 1' bevorzugt die dem Fahrzeuginnenraum zugewandte Seite. Alternativ können beispielsweise einzelne, dünne Drähte aus einem Metal auf der Scheibe 1' angeordnet werden. Die elektrisch leitfähige, lineare Struktur 12 ist durch eine Isolation 13, beispielsweise durch eine Polymerfolie, isoliert und vor direkter Berührung geschützt.

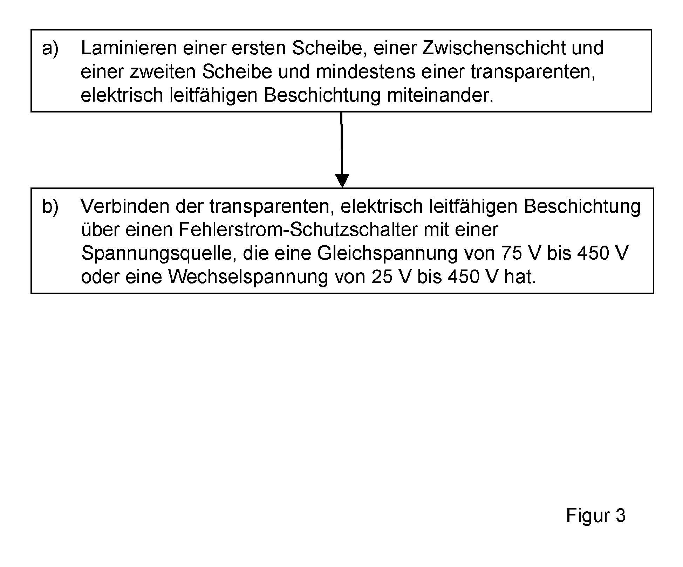

Figur 3 zeigt ein Flussdiagramm eines Ausführungsbeispiels des erfindungsgemäßen Verfahrens am Beispiel einer Schaltungsanordnung 10 mit einer Verbundglasscheibe.

Es wurden Versuche durchgeführt, bei denen eine metallische Prüfsonde in Form eines spitzen Gegenstands in eine hochspannungsführende Verbundscheibe 1 einer erfindungsgemäßen Schaltungsanordnung 10 geschlagen wurde. Die metallische Prüfsonde war über einen Widerstand von 3 kOhm mit der Fahrzeugmasse verbunden. Ein Widerstand von 3 kOhm entspricht etwa dem Widerstand eines menschlichen Körpers. Zum Vergleich wurde die gleiche Prüfsonde in eine hochspannungsführende Verbundscheibe geschlagen, die nach dem Stand der Technik direkt, das heißt ohne Fehlerstrom-Schutzschalter, mit einer Spannungsquelle verbunden war.

In den Versuchen wurden an der Verbundscheibe nach dem Stand der Technik, regelmäßig gesundheitsgefährdende Spannungen an der metallischen Prüfsonde gemessen. Bei der Verbundscheibe 1 in der erfindungsgemäßen Scheibenanordnung 10 konnte in keinem der Versuche eine gesundheitsgefährdende Spannung an der metallischen Prüfsonde gemessen werden. Der Fehlerstrom-Schutzschalter 7 schaltete die Verbundscheibe jeweils spannungsfrei.

Dieses Ergebnis war für den Fachmann unerwartet und überraschend.

Es zeigen:
- 1: Scheibe, Verbundscheibe
- 1': Scheibe, Einzelglasscheibe
- 1.1: erste Scheibe, äußere Scheibe
- 1.2: zweite Scheibe, innere Scheibe
- 2: elektrisch beheizbares Element
- 3: Zwischenschicht
- 4.1, 4.2: Sammelleiter
- 5.1, 5.2: Zuleitung
- 6: Spannungsquelle, Bordelektrik
- 7: Fehlerstrom-Schutzschalter
- 8.1, 8.2: Verbindungsleitung
- 9.1, 9.2: Einschnitt, Laserschnitt
- 10, 10': Scheibenanordnung
- 11: transparente, elektrisch leitfähige Beschichtung
- 12: elektrisch leitfähige, lineare Struktur, Draht
- 13: Isolation
- 14: Randentschichtung

- A-A': Schnittlinie
- B-B': Schnittlinie
- I: Außenseite der äußeren Scheibe 1.1 oder 1
- II: Innenseite der äußeren Scheibe 1.1 oder 1
- III: Innenseite der inneren Scheibe 1.2
- IV: Außenseite der inneren Scheibe 1.2
- n: ganze Zahl ≥ 1

## Patentansprüche

1. Scheibenanordnung (10), umfassend:
- mindestens erste Scheibe (1.1), Zwischenschicht (3) und zweite Scheibe (1.2) und
- mindestens ein elektrisch beheizbares Element (2), das zwischen der Zwischenschicht (3) und der ersten Scheibe (1.1) und/oder zwischen der Zwischenschicht (3) und der zweiten Scheibe (1.2) angeordnet ist,
- eine Spannungsquelle (6) eine Gleichspannung von 75 V bis 450 V oder eine Wechselspannung von 25 V bis 450 V erzeugt,
wobei die Spannungsquelle (6) über einen Fehlerstrom-Schutzschalter (7) mit dem elektrisch beheizbaren Element (2) verbunden ist.

2. Scheibenanordnung (10'), umfassend:
- Scheibe (1') und
- mindestens ein elektrisch beheizbares Element (2), das mindestens teilweise auf der Scheibe (1) angeordnet ist,
- eine Spannungsquelle (6) eine Gleichspannung von 75 V bis 450 V oder eine Wechselspannung von 25 V bis 450 V erzeugt,
wobei die Spannungsquelle (6) über einen Fehlerstrom-Schutzschalter (7) mit dem elektrisch beheizbaren Element (2) verbunden ist.

3. Scheibenanordnung (10, 10') nach einem der Ansprüche 1 oder 2, wobei die Scheibe (1, 1.1, 1.2) Glas, bevorzugt Flachglas, Floatglas, Quarzglas, Borosilikatglas, Kalk-Natron-Glas, oder Polymere, bevorzugt Polyethylen, Polypropylen, Polycarbonat, Polymethylmethacrylat und/oder Gemische davon enthält.

4. Scheibenanordnung (10, 10') nach einem der Ansprüche 1 bis 3, wobei das elektrisch beheizbare Element (2) eine transparente, elektrisch leitfähige Beschichtung (11) oder eine elektrisch leitfähige, lineare Struktur (12) enthält.

5. Scheibenanordnung (10, 10') nach Anspruch 4, wobei die transparente, elektrisch leitfähige Beschichtung (11) einen Flächenwiderstand von 1 Ohm/Quadrat bis 100 Ohm/Quadrat, bevorzugt von 1 Ohm/Quadrat bis 10 Ohm/Quadrat und besonders bevorzugt von 3 Ohm/Quadrat bis 5 Ohm/Quadrat, aufweist.

6. Scheibenanordnung (10, 10') nach einem der Ansprüche 4 oder 5, wobei die transparente, elektrisch leitfähige Beschichtung (11) Silber (Ag), Indium-Zinnoxid (ITO), fluordotiertes Zinnoxid (SnO₂:F) oder aluminiumdotiertes Zinkoxid (ZnO:Al) enthält.

7. Scheibenanordnung (10, 10') nach einem der Ansprüche 4 bis 6, wobei die transparente, elektrisch leitfähige Beschichtung (11) n Einschnitte (9.n), wobei n eine ganze Zahl ≥ 1 ist, aufweist, so dass der Widerstand der transparenten, elektrisch leitfähigen Beschichtung (11) bei einer Gleichspannung von 75 V bis 450 V oder einer Wechselspannung von 25 V bis 450 V eine Heizleistung von 300 W/m² bis 4000 W/m² aufweist.

8. Scheibenanordnung (10, 10') nach Anspruch 4, wobei die elektrisch leitfähige, lineare Struktur (12) einen Draht oder eine aufgedruckte Linie eines leitfähigen Materials enthält.

9. Scheibenanordnung (10, 10') nach einem der Ansprüche 1 bis 8, wobei die Spannungsquelle (6) eine Gleichspannung von 120 V bis 450 V oder eine Wechselspannung von 50 V bis 450 V aufweist.

10. Scheibenanordnung (10, 10') nach einem der Ansprüche 1 bis 9, wobei der Fehlerstrom-Schutzschalter einen Bemessungsfehlerstrom von ≤ 100 mA, bevorzugt von ≤ 30 mA und ganz besonders bevorzugt von ≤ 10 mA aufweist.

11. Verfahren zur Herstellung einer Scheibenanordnung (10) nach einem der Ansprüche 1 und 3 bis 10, wobei
a) erste Scheibe (1.1), Zwischenschicht (3) und zweite Scheibe (1.2) und mindestens eine transparente, elektrisch leitfähige Beschichtung (11) miteinander laminiert werden und
b) die transparente, elektrisch leitfähige Beschichtung (11) über einen Fehlerstrom-Schutzschalter (7) mit einer Gleichspannung von 75 V bis 450 V oder einer Wechselspannung von 25 V bis 450 V verbunden wird.

12. Verwendung der Scheibenanordnung (10, 10') nach einem der Ansprüche 1 bis 10 in Fortbewegungsmitteln für den Verkehr auf dem Lande, in der Luft oder zu Wasser, insbesondere in Kraftfahrzeugen beispielsweise als Windschutzscheibe, Heckscheibe, Seitenscheiben und/oder Dachscheibe sowie als funktionales Einzelstück, und als Einbauteil in Möbeln, Geräten und Gebäuden, insbesondere als elektrischer Heizkörper.

13. Verwendung der Scheibenanordnung (10, 10') nach Anspruch 12 in Kraftfahrzeugen, die durch Umwandlung elektrischer Energie, bevorzugt aus Akkumulatoren, wiederaufladbaren Batterien, Brennstoffzellen oder verbrennungsmotorgetriebenen Generatoren, angetrieben werden, insbesondere in Elektrofahrzeugen.
